# EUROPÄISCHE PATENTSCHRIFT

(11) **EP 1 208 736 B1**
(45) Veröffentlichungstag und Bekanntmachung des Hinweises auf die Patenterteilung: **12.04.2006**
(21) Anmeldenummer: 01126339.9
(22) Anmeldetag: 07.11.2001
(51) Int. Cl.: A01D 90/10, A01D 90/14, B60P 1/00

(54) **Vorrichtung zum Entleeren eines Laderaumes**
Device for emptying a loading space
Dispositif pour vider un espace de chargement

(30) Priorität: 23.11.2000 DE 10058189
(43) Veröffentlichungstag der Anmeldung: 29.05.2002
(73) Patentinhaber: CLAAS Selbstfahrende Erntemaschinen GmbH, 33428 Harsewinkel (DE)
(72) Erfinder: Gausmann, Ludger, 49170 Hagen a.TW (DE); Renger, Hermann, 33129 Delbrück (DE)

(56) Entgegenhaltungen:
- FR-A- 1 547 458
- FR-A- 2 533 868
- US-A- 2 902 180
- US-A- 3 212 657
- US-A- 3 771 673
- US-A- 5 143 508

## Beschreibung

Die Erfindung betrifft eine Laderaumentleervorrichtung eines forst- oder landwirtschaftlichen Ernte- oder Schnittgut aufnehmenden Behältnisses mittels eines verlagerbaren Schilds, der durch Führungsmittel in seiner Bewegungsbahn gehalten ist,

Aus der Praxis sind bereits Anhänger bekannt, bei denen das auf der starr mit dem Fahrgestell verbundenen Bodenfläche liegende Ladegut durch Verschieben eines relativ zur Bodenfläche bewegbaren Schildes in Richtung zu dem in Fahrtrichtung des Anhängers gesehenen hinteren Ende nach Entfernen oder Verschwenken seiner Rückwand entleert werden kann. Die Verschiebung des Schildes muss dabei längs der gesamten Ladefläche des Anhängers erfolgen. Hierfür sind in der herkömmlichen Ausführung sogenannte Teleskopzylinder erforderlich, deren erforderlicher langer Hub, nämlich bedingt durch die Länge der Ladefläche, dazu führt, daß sich die Kolbenstange in ausgefahrenem Zustand in der Mitte durchbiegt. Infolge dieser Verbiegung wird der Zylinder im Laufe der Zeit undicht und muß ausgewechselt werden. Zudem sind Teleskopzylinder aber sehr teuer. Darüber hinaus erfordert der Teleskopzylinder eine hohe Leistung der Hydraulikpumpe des Zugfahrzeuges, da stets das gesamte Ladegut zum hinteren Ende des Anhängers hin verschoben werden muß. Derart starke Hydraulikanlagen sind aber nicht bei allen im Einsatz befindlichen Traktoren vorhanden.

Aus der US-Patentschrift 3,771,673 ist ein Ladewagen bekannt, in dem der das Gut abschiebende Schild über mehrere parallel zueinander verlaufende Endlosketten bewegt wird. Jede dieser Endlosketten umschlingt dabei zwei Kettenräder, die in einem vorderen und einem hinteren Ausschnitt der Seitenwand des Ladewagens gelagert sind. Ein Trum einer Endloskette verläuft außen an einer Ladewagenseitenwand. Hieraus resultiert eine äußerst hohe Verletzungsgefahr, die verfügbare theoretische Baubreite kann nicht voll vom Bauraum des Ladebehälters ausgenutzt werden, und es befinden sich seitliche Öffnungen im Ladebehälter, die zu Erntegutverlusten führen können. Derart ausgestattete Ladewagen konnten sich deshalb in der Praxis nicht durchsetzen, obwohl die Führung und Bewegung eines verschieblichen Wand über Ketten äußerst robust, einfach und wenig störanfällig ist. Auch kann ein Wegkippen des Schildes nicht sicher verhindert werden, wenn sich über die Laderaumhöhe eine unterschiedliche Lastverteilung ergibt.

Ausgehend von dem zuletzt genannten Stand der Technik liegt der Erfindung die Aufgabe zugrunde, einen Schild durch Führungsmittel sicher zu führen und den Antrieb zu verbessern.

Dies wird erreicht, indem Führungsmittel entlang der Bewegungsrichtung des Schildes gehalten sind, zumindest einige der Führungsmittel länger sind als der maximale Verfahrweg des Schildes entlang seiner Bewegungsbahn, der motorische Antrieb des Schildes auf Führungsmittel wirkt und die längeren Führungsmittel mindestens zweimal an Umlenkrädern umgelenkt werden, die an dem Schild jeweils paarweise angeordnet sind und die jeweiligen Führungsmittel der paarweise angeordneten Umlenkräder im Bereich zwischen den die jeweiligen Führungsmittel aufnehmenden Umlenkrädem überkreuzend geführt werden.

Eine solche Führung des Schildes hat den Vorteil, dass der Schild an mehreren Positionen, an denen Umlenkräder befestigt sind, abgestützt wird. Um eine solche Wirkung zu erzielen, muß ein umgelenktes längeres Führungsmittel mindestens um das Maß länger als die Bewegungsbahn des Schildes sein, um das die ein Führungsmittel umlenkenden Umlenkräder voneinander beabstandet sind. Je größer der Abstand der Umlenkräder voneinander gewählt wird, umso größer wird die Stützwirkung. Ein optimaler Stützeffekt kann erzielt werden, wenn Führungsmittel entlang der Bewegungsbahn überkreuzend geführt sind. Bei einem Einwirken des Antriebs auf die Führungsmittel sind keine Hydraulikzylinder mehr erforderlich, sondern der Antrieb kann sich an den Führungsmitteln entlang bewegen, oder die Führungsmittel sind ortsfest am Schild befestigt, und die Führungsmittel werden an der Bewegungsbahn entlang bewegt. Prinzipiell genügt es, wenn eines der Führungsmittel antriebsverbunden ist, es können jedoch auch mehrere oder alle der Führungsmittel antriebsverbunden sein.

Es ist vorteilhaft, wenn die Führungsmittel im Innenraum des Ladebehälters angeordnet sind. Es ragen dann weder bewegliche Teile des Antriebes noch Teile der Führungsmittel bzw. Ketten aus dem Behältnis hervor, so daß Verletzungen von Bedienpersonen nahezu ausgeschlossen sind. Ein weiterer Vorteil einer solchen Anordnung ist darin zu sehen, daß keinerlei Durchbrüche zur Führung der Führungsmittel, wie z.B. Ketten, in einer Wand des Behältnisses vorgesehen sein müssen und zusätzliche, abdeckende Schutzeinrichtungen nicht erforderlich sind.

Um zu vermeiden, daß Gutteile mit dem Antrieb in Verbindung geraten, ist der zumindest eine Getriebemotor an der dem Gut entgegengesetzten Seite des Schildes befestigt, wobei auf dessen Ausgangswelle Antriebsräder gegenüber der Antriebswelle unverdrehbar aufgesetzt sind. Weiterhin sind mit dem Schild frei drehbare und mit fester Teilung versehene Umlenkräder verbunden, die ebenfalls auf der dem Gut entgegengesetzten Seite des Schildes angeordnet sind. Wird die erfindungsgemäße Vorrichtung bei einem zylindrischen Silogehäuse eingesetzt, sind in vorteilhafter Weise drei Antriebsräder mit der Ausgangswelle des Getriebemotors und drei frei drehbare Umlenkräder mit dem Schild verbunden, so daß lediglich drei Ketten eingesetzt zu werden brauchen, um den Schild ausreichend zu stabilisieren.

Anstelle einer Anordnung des Motors auf der Rückseite des Schildes ist es auch möglich, die Führungsmittel am Schild ortsfest zu befestigen und die Führungsmittel und den daran befestigten Schild motorisch angetrieben durch den Laderaum zu bewegen. Das kann durch endseitig angeordnete Zugmotoren geschehen, die das Führungsmittel auf endseitig angeordneten Trommeln auf- bzw. abwickeln. Bei einer solchen Anordnung wird der Laderaum nicht für im Laderaum angeordnete Motoren verbraucht.

Bei rechteckiger Ausbildung des Schildes empfiehlt es sich, zu seiner Stabilisierung und einwandfreien Führung mindestens drei, besser vier Führungsmittel und zugehörige Umlenkräder mit dem Schild zu verbinden. Nach einem weiteren Merkmal der Erfindung fluchten die Drehachsen der Umlenkräder miteinander.

Bei der Verwendung von vier Ketten sind vorteilhaft je zwei Antriebsräder mit je einem Ende der Ausgangswelle des Getriebemotors verbunden.

In Abhängigkeit vom zur Verfügung stehenden Einbauraum kann es zweckmäßig sein, daß zwei Getriebemotoren mit einer gemeinsamen Ausgangswelle vorgesehen sind. Selbstverständlich ist es auch möglich, daß bei der Verwendung von zwei Getriebemotoren mit zwei Ausgangswellen diese beiden miteinander zum Zwecke des Gleichlaufs verbunden werden.

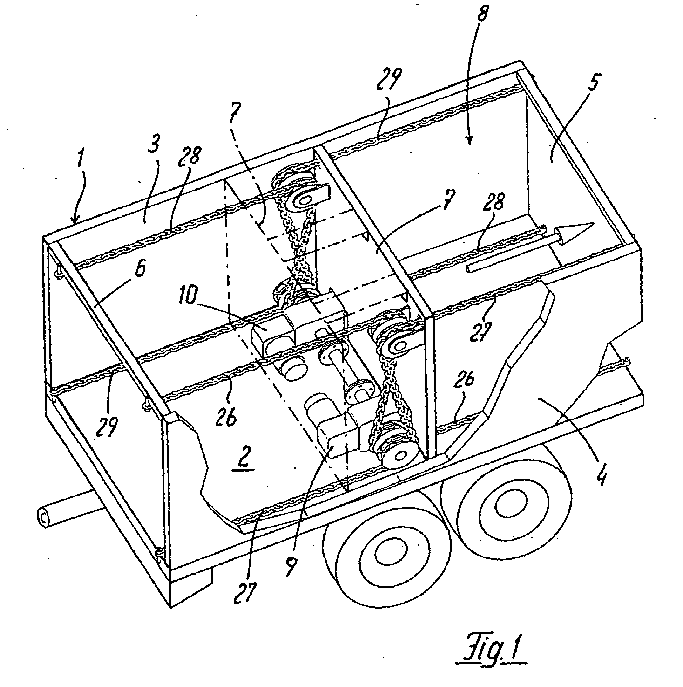

Bei in etwa horizontal angeordnetem Ladeboden und folglich senkrecht dazu stehendem Schild kann es von großem Vorteil sein, zwei Schilde mit Abstand zueinander anzuordnen und in dem Abstandsraum die Kettenräder und den Getriebemotor anzuordnen. Bei einer so ausgestalteten Entleervorrichtung ist es dann möglich, das Gut wahlweise stirn- oder heckseitig abzuschieben. (in Fig.1 gestrichelt dargestellt). Auch ist es vorstellbar, einen oder zwei Schilde quer zur Fahrtrichtung zum seitlichen Entladen auf der einen oder anderen Seite des Laderaumes einzusetzen und die Führungsmittel entsprechend anzuordnen.

Weitere vorteilhafte Ausführungsformen sind in den Unteransprüchen näher definiert. Im folgenden soll die Erfindung anhand zweier Figuren näher erläutert werden. Dabei zeigt:
- Figur 1: die erfindungsgemäße Entleervorrichtung bei einem Ladewagen;

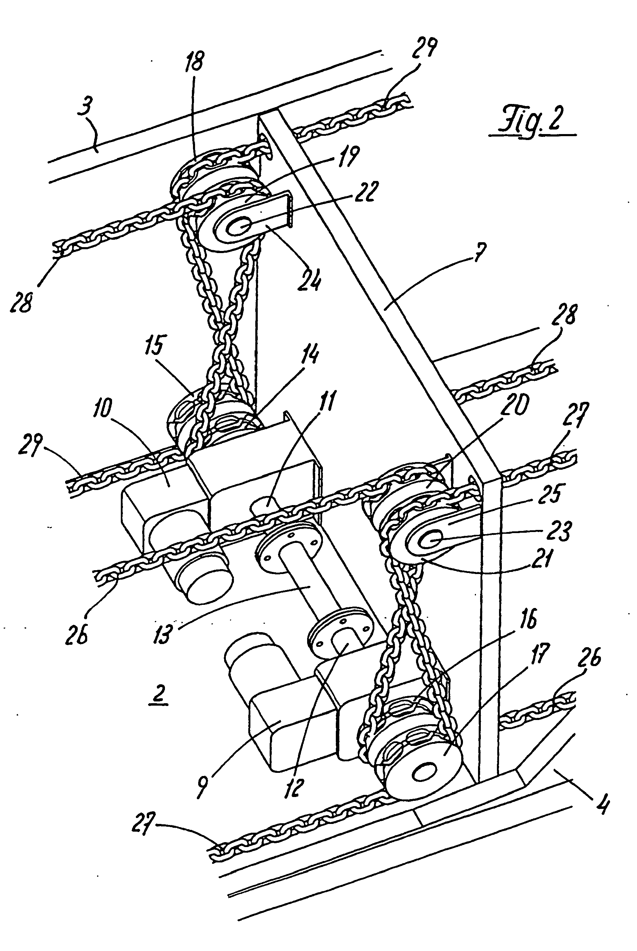

- Figur 2: in vergrößerter Form den Entleerungsschild mit denzugehörigen Antrieben und
- Figur 3: die erfindungsgemäße Entleervorrichtung bei einem zylindrischen Silo.

Mit 1 ist ein Ladewagen bezeichnet mit einer Bodenplatte 2, zwei Seitenwänden 3 und 4 und einer aufschwenkbaren Heckklappe 5. Die beiden Seitenwände 3 und 4 sind in ihrem vorderen Bereich über eine obere Traverse 6 zusätzlich zu ihrer Befestigung an der Bodenplatte 2 miteinander verbunden. Auf der Bodenplatte 2 stützt sich ein senkrecht stehender Schild 7 ab, der zwischen sich und der Heckklappe 5 den Laderaum 8 bildet. Auf der dem Laderaum 8 abgewandten Seite des Schildes 7 sind mit diesem zwei Getriebemotoreinheiten 9 und 10 fest verbunden. Die beiden Ausgangswellen 11 und 12 der Getriebemotoremheiten 9 und 10 sind miteinander über eine Zwischenwelle 13 fest verbunden. Auf die nach außen ragenden Enden der Getriebewellen 11 und 12 sind jeweils zwei Kettenräder 14, 15 und 16, 17 fest aufgesetzt. Die angetriebenen Kettenräder 14 -17 sind hinsichtlich der Führungsmittel im Ausführungsbeispiel zugleich auch Umlenkräder. Es sind jedoch auch andere Ausgestaltungen denkbar, in denen die Kettenräder keine Umlenkfunktion hinsichtlich der Führungsmittel aufweisen. Jedem Kettenradpaar 14, 15 beziehungsweise 16, 17 sind zwei Kettenumlenkräder 18, 19 beziehungsweise 20, 21 zugeordnet, die sich frei drehbar auf Achsen 22 und 23 abstützen. Letztere werden von den Konsolen 24 und 25 getragen, die mit dem Schild 7 fest verschweißt sind. In dem dargestellten Ausführungsbeispiel werden die Kettenräder 16 und 20 von einer ersten Kette 26, die Kettenräder 17 und 21 von einer zweiten Kette 27, die Kettenräder 14 und 19 von einer dritten Kette 28 und die Kettenräder 15 und 18 von einer vierten Kette 29 umschlungen. Die erste Kette 26 ist einendig mit der vorderen Oberen Traverse 6 und anderenends mit der Bodenplatte 2 verbunden. Analog zu der ersten Kette 26 ist auch die dritte Kette 28 mit ihren beiden Enden befestigt. Die zweite Kette 27 ist mit ihrem vorderen Ende mit der Bodenplatte 2 und mit ihrem hinteren Ende mit einer oberen hinteren Traverse 29 verbunden, die die beiden Seitenwände 3 und 4 stabilisiert. Analog zu der zweiten Kette 27 ist auch die vierte Kette 29 endseitig befestigt. Die Durchgangsöffnungen für die vier Ketten im Schild 7 sind dem Kettenprofil angepaßt, so daß kaum Gut durch diese Durchtrittsöffnungen hindurchgetangen kann.

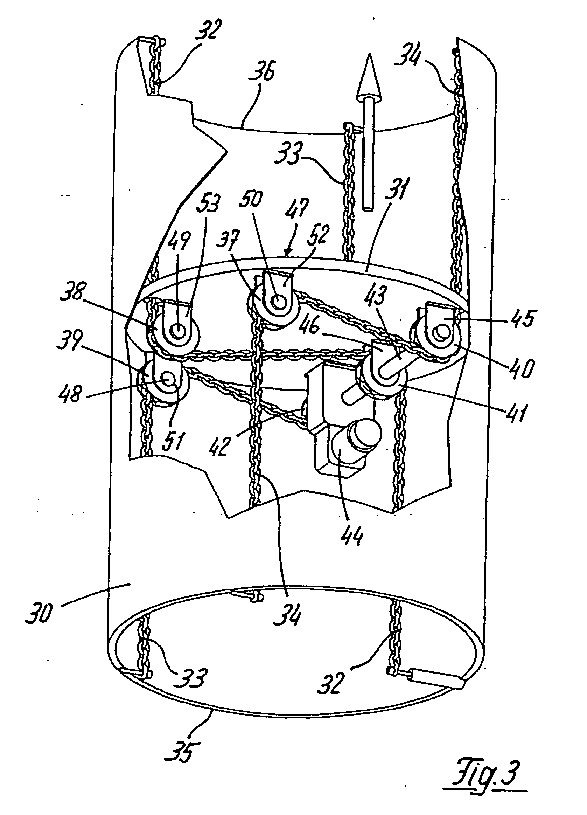

Die Figur 3 zeigt ein nicht die Erfindung betreffendes zylindrisches Silogehäuse 30 mit im inneren angeordnetem Schild 31. Das zylindrische Silogehäuse 30 kann, wie bei Silofahrzeugen in liegender, als auch in aufrechter stehender Form, wie bei stationären Siloanlagen Anwendung finden. Bei aufrecht stehenden, stationären, zylindrischen Silos ist der Schild 31 gleichzeitig der Lastboden. Der Schild, sprich Lastboden 31 ist dabei an drei Ketten 32, 33 und 34 aufgehängt, deren Enden jeweils mit dem oberen und unteren Rand 35 und 36 des Silogehäuses 30 fest verbunden sind. Jede Kette umschlingt dabei zum einen ein frei drehbar gelagertes Kettenrad 37, 38 und 39 sowie ein antreibbares Kettenrad 40, 41 und 42. Die antreibbaren Kettenräder 40 bis 42 sind fest mit der Antriebswelle 43 eines Getriebemotors 44 verbunden. Die die Antriebswelle 43 abstützenden Lagerböcke 45 und 46 sind ebenso wie der Getriebemotor 44 mit der Seite des Lastbodens 31 fest verbunden, die der Ladefläche 47 entgegengesetzt liegt.

Die Achsen 48, 49 und 50, auf die die Umlenkkettenräder 37, 38 und 39 frei drehbar aufgesetzt sind, stützen sich in Konsolen 51, 52 und 53 ab, die mit dem Lastboden 31 verschweißt sind. Aus diesem Beispiel gemäß Figur 3 wird deutlich, daß der Schild, daß heißt der Lastboden 31, lediglich von drei Ketten bewegt und einwandfrei geführt werden kann.

### Bezugszeichenliste

- 1 -: Ladewagen
- 2 -: Bodenplatte
- 3 -: Seitenwände
- 4 -: Seitenwände
- 5 -: Heckklappen
- 6 -: Traverse
- 7 -: Schild
- 8. -: Laderaum
- 9 -: Getriebemotoren
- 10 -: Getriebemotoren
- 11 -: Ausgangswellen
- 12 -: Ausgangswellen
- 13 -: Zwischenwellen
- 14 -: Kettenräder
- 15 -: Kettenräder
- 16 -: Kettenräder
- 17 -: Kettenräder
- 18 -: Umlenkräder
- 19 -: Umlenkräder
- 20 -: Umlenkräder
- 21 -: Umlenkräder
- 22 -: Achsen
- 23 -: Achsen
- 24 -: Konsolen
- 25 -: Konsolen
- 26 -: erste Kette
- 27 -: zweite Kette
- 28 -: dritte Kette
- 29 -: vierte Kette
- 30 -: Silogehäuse
- 31 -: Schild / Lastboden
- 32 -: Ketten
- 33 -: Ketten
- 34 -: Ketten
- 35 -: Rand
- 36 -: Rand
- 37 -: Kettenrad
- 38 -: Kettenrad
- 39 -: Kettenrad
- 40 -: antreibbares Kettenrad
- 41 -: antreibbares Kettenrad
- 42 -: antreibbares Kettenrad
- 43: Antriebswelle
- 44: Getriebemotor
- 45: Lagerböcke
- 46: Lagerböcke
- 47: Ladefläche
- 48: Achsen
- 49: Achsen
- 50: Achsen
- 51: Konsolen
- 52: Konsolen
- 53: Konsolen

## Patentansprüche

1. Laderaumentleervorrichtung eines forst- oder landwirtschaftliches Ernte- oder Schnittgut aufnehmendes Behältnisses bestehend aus einem verlagerbaren Schild, der durch Führungsmittel in seiner Bewegungsbahn gehalten wird,
**dadurch gekennzeichnet,**
**dass** Führungsmittel (26-29, 32-34) entlang der Bewegungsrichtung des Schildes (7, 31) gehalten sind, zumindest einige der Führungsmittel (26-29, 32-34) länger als der maximale Verfahrweg des Schildes (7, 31) entlang seiner Bewegungsbahn, der motorische Antrieb des Schildes (7, 31) auf Führungsmittel (26-29, 32-34) wirkt und die längeren Führungsmittel (26-29, 32-34) mindestens zweimal an Umlenkrädern (14-21, 37-39) umgelenkt werden, die an dem Schild (7, 31) jeweils paarweise angeordnet sind und die jeweiligen Führungsmittel (26-29) der jeweils paarweise angeordneten Umlenkräder (14-15, 16-17, 18-19, 20-21) im Bereich zwischen den die jeweiligen Führungsmittel (26-29) aufnehmenden Umlenkrädern (14-21) überkreuzend geführt werden.

2. **Laderaumentleervorrichtung** nach Anspruch 1,
**dadurch gekennzeichnet,**
**dass** die Führungsmittel (26-29, 32-34) im Inneren des Laderaumes angeordnet sind.

3. Laderaumentleervorrichtung nach Anspruch 1 oder 2,
**dadurch gekennzeichnet,**
**dass** der an dem Gut entgegengesetzten Seite des Schildes (7 bzw. 31) zumindest ein Getriebemotor (9, 10 bzw. 44) befestigt ist, auf dessen Ausgangswelle (11, 12 bzw. 43) Antriebsräder (14 bis 17 bzw. 40 bis 42) gegenüber der Antriebswelle unverdrehbar aufgesetzt sind.

## Claims

1. A load space emptying apparatus of a container for receiving forestry or agricultural crop or cut material, comprising a displaceable shield which is held by guide means in its path of movement, **characterised in that**
guide means (26-29, 32-34) are held along the direction of movement of the shield (7, 31), at least some of the guide means (26-29, 32-34) are longer than the maximum displacement travel of the shield (7, 31) along its path of movement, the motor drive of the shield (7, 31) acts on guide means (26-29, 32-34) and the longer guide means (26-29, 32-34) are deflected at least twice at direction-changing wheels (14-21, 37-39) which are respectively arranged in pairs on the shield (7, 31) and the respective guide means (26-29) of the respective direction-changing wheels (14-15, 16-17, 18-19, 20-21) arranged in pairs are guided in mutually crossing relationship in the region between the direction-changing wheels (14-21) accommodating the respective guide means (16-29).

2. A load space emptying apparatus according to claim 1 **characterised in that** the guide means (26-29, 32-34) are arranged in the interior of the load space.

3. A load space emptying apparatus according to claim 1 or claim 2 **characterised in that** fixed to the side of the shield (7 or 31) in opposite relationship to the material is at least one transmission motor (9, 10 or 44) having an output shaft (11, 12 or 43) on which drive wheels (14 to 17 or 40 to 42) are fitted non-rotatably with respect to the drive shaft.

## Revendications

1. Dispositif de vidage d'espace de chargement d'un contenant recevant du produit sylvicole ou agricole récolté ou coupé, constitué d'un bouclier déplaçable qui est maintenu sur son trajet de déplacement par l'intermédiaire de moyens de guidage, **caractérisé en ce que** des moyens de guidage (26-29, 32-34) sont maintenus le long de la direction de déplacement du bouclier (7, 31), au moins certains des moyens de guidage (26-29, 32-34) sont plus longs que la course de déplacement maximale du bouclier (7, 31) le long de son trajet de déplacement, la commande motorisée du bouclier (7, 31) agit sur des moyens de guidage (26-29, 32-34) et les moyens de guidage plus longs (26-29, 32-34) sont déviés au moins deux fois par des poulies de renvoi (14-21, 37-39) qui sont disposées respectivement par paires sur le bouclier (7, 31), et les moyens de guidage respectifs (26-29) des poulies de renvoi disposées respectivement par paires (14-15, 16-17, 18-19, 20-21) sont guidés de manière croisée dans la zone située entre les poulies de renvoi (14-21) recevant les moyens de guidage respectifs (26-29).

2. Dispositif de vidage d'espace de chargement selon la revendication 1, **caractérisé en ce que** les moyens de guidage (26-29, 32-34) sont disposés à l'intérieur de l'espace de chargement.

3. Dispositif de vidage d'espace de chargement selon la revendication 1 ou 2, **caractérisé en ce qu'**au côté du bouclier (7 respectivement 31) situé à l'opposé du produit est fixé au moins un moto-réducteur (9, 10 respectivement 44) dont l'arbre de sortie (11, 12 respectivement 43) supporte des poulies d'entraînement (14 à 17 respectivement 40 à 42) montées sans possibilité de rotation par rapport à l'arbre d'entraînement.
